Europäisches Patentamt

European Patent Office

Office européen des brevets

(11) Numéro de publication: **0 368 196 B1**

(12) **FASCICULE DE BREVET EUROPEEN**

(45) Date de publication de fascicule du brevet: **23.03.94**

(51) Int. Cl.5: **H01S 3/06**, H01S 3/17, G02B 6/02

(21) Numéro de dépôt: **89120481.0**

(22) Date de dépôt: **06.11.89**

(54) **Amplificateur laser à fibre optique dopée.**

(30) Priorité: **10.11.88 FR 8814711**

(43) Date de publication de la demande:
**16.05.90 Bulletin 90/20**

(45) Mention de la délivrance du brevet:
**23.03.94 Bulletin 94/12**

(84) Etats contractants désignés:
**CH DE FR GB IT LI NL SE**

(56) Documents cités:
**WO-A-87/01246**
**US-A- 4 780 877**

**OPTICS LETTERS, vol. 12, no. 11, novembre 1987, pages 888-890; E. DESURVIRE et. al.: "High-gain erbium-doped traveling-wave fiber amplifier"**

**TECHNICAL DIGEST OF THE 14TH EUROPEAN CONFERENCE ON OPTICAL COMMUNICATION partie 1, septembre 1988, pages 62-65; B. AINSLIE et. al.: "Fabrication and optimisation of the erbium distribution in silica based doped fibres"**

(73) Titulaire: **ALCATEL ALSTHOM COMPAGNIE GENERALE D'ELECTRICITE**
**54, rue La Boétie**
**F-75382 Paris Cédex 08(FR)**

(72) Inventeur: **Février, Hervé**
**11, boulevard du 1er Mai**
**F-91300 Massy(FR)**
Inventeur: **Ramos, Josiane**
**10, rue des Marronniers**
**F-91070 Bondoufle(FR)**
Inventeur: **Auge, Jacques**
**2, rue des Frères Capitaine**
**F-91530 Saint Chéron(FR)**
Inventeur: **Marcerou, Jean-François**
**La Boeide**
**F-84860 Caderousse(FR)**
Inventeur: **Jacquier, Bernard c/o Laboratoires de Marcoussis**
**Département DEM**
**Route de Nozay**
**F-91460 Marcoussis(FR)**
Inventeur: **Gacon, Jean-Claude**
**33, Allée des Garennes**
**Montanay**
**F-69250 Neuville sur Saône(FR)**

Rank Xerox (UK) Business Services
(3.10/3.09/3.3.3)

EP 0 368 196 B1

TECHNICAL DIGEST OF THE 13TH EURO-
PEAN CONFERENCE ON OPTICAL COMMUNI-
CATION, vol. 3, pages 89-94, 1987; D. PAYNE
et. al.: "Rare-earth doped fibre lasers and
amplifiers"

JOURNAL OF PHYSICS E. SCIENTIFIC INS-
TRUMENTS, vol. 19, no. 2, février 1986, page
89, Bristol, GB; "New lasers invented"

ELECTRONICS LETTERS, vol. 23, no. 16, pages 865-866, 30 juillet 1987, Stevenage,
Herts, GB; C. MILLAR et. al.: "Low-Threshold
CW Operation of an Erbium-Doped Fibre Laser Pumped at 807nm Wavelength"

TECHNICAL DIGEST OF THE 14TH EURO-
PEAN CONFERENCE ON OPTICAL COMMUNI-
CATION, partie 2, septembre 1988, pages
25-28; R. LAMING et.al.: "Optimal pumping of
erbium-doped fibre optical amplifiers"

(74) Mandataire: **Weinmiller, Jürgen et al**
**Lennéstrasse 9**
**Postfach 24**
**D-82336 Feldafing (DE)**

## Description

La présente invention concerne un amplificateur laser à fibre optique dopée, appliqué notamment aux systèmes de télécommunications à fibre optique.

Un tel amplificateur est destiné à recevoir un signal optique de longeur d'onde λ s ainsi qu'un signal de pompe de longueur d'onde λ p réunis par un coupleur à l'entrée d'une fibre dopée amplificatrice. Le dopage à l'erbium est bien adapté à l'amplification optique dans la troisième fenêtre des télécommunications aux environs de 1,55 μm.

Un amplificateur est caractérisé par son gain net G en décibels tel que :

$$G \text{ (dB)} = 10 \times \log (P_{\text{signal en sortie}}/P_{\text{signal en entrée}}).$$

Le gain net d'amplification est la différence entre le gain brut d'amplification, dont l'origine est l'émission stimulée, et les pertes à la longueur d'onde du signal.

Il est à noter qu'il existe une puissance de pompe pour laquelle on arrive à un palier de saturation du gain net d'amplification. Cette puissance de pompe "de saturation" est la puissance de pompe nécessaire pour obtenir un gain maximum, la longueur de la fibre étant fixée. Il est donc important que cette puissance soit la plus faible possible, c'est-à-dire que l'efficacité du processus soit maximum. Une bonne mesure de l'efficacité du processus est donc le gain net rapporté à la puissance de pompe nécessaire, on obtient une valeur g en dB/mW. Cette puissance de pompe peut être relativement mal utilisée s'il existe, par exemple, des pertes dans la fibre à cette longueur d'onde qui ont une origine différente de l'absorption par la terre rare.

Des études sur l'amplification des fibres dopées à l'erbium ont été publiées dans les documents suivants :

Référence 1 : "Optimal pumping of erbium-doped-fibre optical amplifiers", R.I. LAMING, L. REEKIE, D.N. PAYNE, P.L. SCRIVENER, F. FONTANA, A. RIGHETTI, 14th European Conference on Optical Communication, 11-15 september 1988, Brighton, UK.

Référence 2 : "High-gain erbium-doped traveling-wave fiber amplifier", E. DESURVIRE, J.R. SIMPSON, P.C. BECKER, Optics Letters, Vol. 12 (1987), pp 888-890.

Les documents suivants font état des méthodes d'élaboration et des caractéristiques des fibres utilisées dans les références 1 et 2 :

- Référence 3 : "Fabrication of Al₂0₃ co-doped optical fibres by a solution doping technique", S.B. POOLE, 14th European Conference on Optical Communication, 11-15 september 1988, Brighton, UK.

- Référence 4 : "Fabrication and optimisation of the erbium distribution in silica based doped fibers" ; Technical Digest of the 14 th. European Conference on Optical Communication" partie 1, septembre 1988, pages 62-65.

Les amplificateurs optiques connus comportent une fibre optique relativement fortement dopée à l'erbium (typiquement quelques centaines de ppm), de longueur typique de l'ordre de 3 mètres, et d'une longueur maximale de l'ordre de 13 mètres.

La présente invention a pour but de réaliser un amplificateur laser à fibre optique présentant un gain supérieur à celui des amplificateurs connus, pour une puissance de pompe donnée, c'est-à-dire assurant une meilleure efficacité du processus.

La présente invention a pour objet un amplificateur laser à fibre dopée à l'erbium, caractérisé par le fait que ladite fibre est dopée à un taux compris entre 5 et 50 ppm, que la longueur de ladite fibre est comprise entre 250 mètres et 30 mètres selon le taux de dopage choisi, et que la position radiale de la zone dopée coïncide sensiblement avec le maximum d'énergie de l'ensemble des modes de propagation de la longueur d'onde de pompe dans ladite fibre, ladite position radiale de la zone dopée se situant à une distance du centre de la fibre comprise entre 0,6 R et 0,85 R, R étant le rayon du coeur de cette fibre.

D'autres caractéristiques et avantages de la présente invention apparaîtront au cours de la description suivante de modes de réalisation donnés à titre illustratif mais nullement limitatif. Dans le dessin annexé :

- La figure 1 est un schéma de principe d'un amplificateur laser à fibre.
- La figure 2 montre deux courbes A₁, A₂ d'atténuation spectrale (en dB/km) de deux fibres de l'art antérieur.
- Les figures 3 et 4 montrent des courbes F₁, F₂ d'atténuation spectrale (en dB/km) de deux fibres selon l'invention.
- La figure 5 indique les variations d'indice n dans le coeur de la fibre en fonction du rayon R et fait apparaître la zone de localisation de la couche dopée à l'erbium.

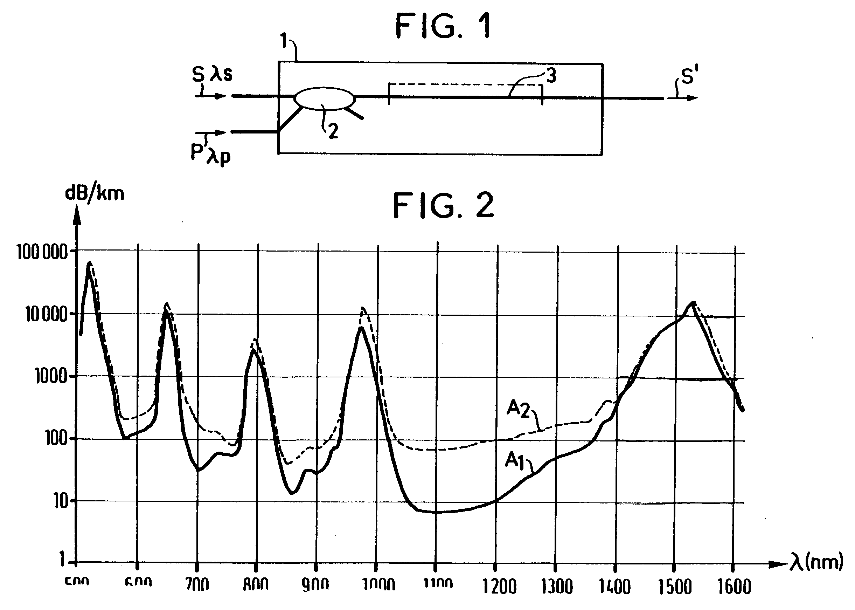

On voit schématiquement dans la figure 1 un signal optique S de longuer d'onde λs ainsi qu'un signal de pompe P de longueur d'onde λp à l'entrée d'un amplificateur 1.

Les deux signaux S et P sont introduits par l'intermédiaire d'un coupleur 2 à l'entrée d'une fibre dopée amplificatrice 3 selon l'invention. A la sortie de l'amplificateur 1, on retrouve un signal S' de longueur d'onde λs amplifié.

On réalise un amplificateur optique à partir d'une fibre de 140 mètres dont la matrice vitreuse du coeur est à base de silice additionnée d'oxydes de type $GeO_2$ et $P_2O_5$ ; elle est dopée à l'erbium avec une teneur de 10 ppm, ce chiffre étant une mesure globale obtenue grâce à la courbe d'atténuation spectrale.

Pour réaliser la préforme d'une telle fibre on utilise un procédé classique de type "MCVD" pour déposer les couches de gaine et les premières couches de coeur ; après la vitrification de la couche de coeur correspondant à l'endroit où l'on souhaite obtenir une couche dopée, on opère de préférence conformément au procédé décrit dans la demande de brevet français n° 87 14 286 du 16 octobre 1987.

On dépose sur le tube déjà obtenu une couche d'erbium par nébulisation en mettant en oeuvre les phases suivantes :

- réalisation d'une liqueur de dopage liquide contenant l'erbium dans un porteur liquide volatil,
- nébulisation de la liqueur pour la mettre sous forme d'un brouillard de dopage constitué de gouttelettes en suspension dans un gaz porteur,
- mise en place d'un tube d'amenée de brouillard dans l'espace intérieur dudit tube, ce tube d'amenée de brouillard ayant une extrémité d'entrée extérieure audit tube, pénétrant dans ce tube à la première extrémité de celui-ci, et s'étendant jusqu'à une extrémité de sortie dans cet espace intérieur,
- alimentation du tube d'amenée de brouillard par son extrémité d'entrée pour qu'il émette le brouillard de dopage à son extrémité de sortie dans l'espace intérieur dudit tube de manière que le dépôt d'erbium soit réalisé par le dépôt de gouttelettes de ce brouillard sur la surface intérieure dudit tube,
- déplacement contrôlé du tube d'amenée de brouillard dans ledit tube, l'alimentation étant maintenue, de manière que l'extrémité de sortie de ce tube d'amenée de brouillard parcoure la longueur du tube, et que le dépôt d'erbium soit effectué sur toute la surface intérieure de ce dernier,
- séchage de la surface intérieure après le dépôt pour évaporer le porteur liquide,
- dépôt d'une couche de recouvrement en verre sur la surface intérieure dudit tube après le séchage de cette surface,
- chauffage-diffusion, cette opération étant un chauffage dudit tube à une température assurant une diffusion de l'erbium dans le verre.

On continue ensuite par le dépôt de la couche de coeur suivante et la réalisation de la préforme par la technique classique. La phase de dépôt par nébulisation convient pour l'erbium qui est un dopant difficile à mettre en phase vapeur. Toutes les autres phases de fabrication de la fibre sont conformes au procédé conventionnel dit de dépôt "MCVD".

Le procédé qui vient d'être décrit permet d'incorporer l'erbium dans une préforme, à partir d'une seule extrémité, de ne pas démonter le tube lorsqu'il a été préalablement monté sur un tour de verrier, d'éviter le risque de pollution à l'occasion de cette incorporation à partir de l'autre extrémité si cette dernière a été antérieurement polluée ; en outre il permet de réaliser une distribution longitudinale très homogène de l'erbium et finalement, lorsque ce tube est destiné à être rétreint pour constituer une préforme dont sera tirée la fibre optique, d'obtenir de manière économique une fibre dopée présentant de très bonnes qualités optiques et de très bonnes qualités d'incorporation de l'erbium.

La fibre selon l'invention dopée à l'erbium avec une teneur de 10 ppm et une longueur de 140 mètres est soumise à un rayonnement de pompe de longueur d'onde égale à 514,5 nanomètres. On obtient, pour une puissance de pompe $P_p$ de 45 mW, un gain net G de 16 dB, soit un gain relatif g de 0,35 dB/mW.

A titre comparatif, la fibre amplificatrice de la référence 1 de l'art antérieur précité, comportant une matrice $SiO_2/Al_2O_3$ dopée à 0,3 % en poids d'oxyde d'erbium et de longueur 2 m, procure un gain net G de 16 dB, mais pour une puissance de pompe $P_p$ de 100 mW, soit un gain relatif g de 0,16 dB/mW.

La fibre amplificatrice de la référence 2 de l'art antérieur précité, comportant une matrice $SiO_2/Al_2O_3$, dopée à environ 70 ppm d'erbium et de longueur 13 m, procure un gain net G de 22 dB pour une puissance de pompe $P_p$ de 100 mW, soit un gain relatif g de 0,22 dB/mW.

Le gain g, qui traduit l'efficacité du processus, est de manière tout à fait surprenante beaucoup plus important dans les fibres selon l'invention que dans les fibres connues.

On ne peut pas admettre simplement que le gain d'amplification est établi par le produit de la longueur de l'amplificateur par la concentration en erbium. La présente invention fait en effet apparaître de façon très inattendue qu'il est beaucoup plus avantageux d'utiliser comme amplificateur une fibre longue faiblement dopée, la longueur ne constituant pas un inconvénient pour ce type d'application. Ce résultat est important car, dans les versions industrielles des amplificateurs à fibres, les sources de pompage sont des diodes laser pour lesquelles la puissance disponible injectée dans la fibre est plus limitée que dans le cas des lasers de pompage utilisés au niveau du laboratoire, et il est fondamental d'obtenir une efficacité maximale de l'amplificateur.

On a représenté dans la figure 2 les courbes d'atténuation spectrales $A_1$ et $A_2$ de deux fibres optiques de l'art antérieur : pertes en dB/km (échelle logarithmique) en fonction de la longueur d'onde $\lambda$ en nanomètres. Ces courbes sont tirées de la référence 3 de l'art antérieur précité.

La courbe $A_1$ correspond à une fibre dont la matrice vitreuse de coeur est à base de $SiO_2/Al_2O_3$ et dopée à environ 300 ppm d'erbium.

La courbe $A_2$ correspond à une fibre dont la matrice vitreuse de coeur est à base de $SiO_2/GeO_2$ et dopée à environ 200 ppm d'erbium.

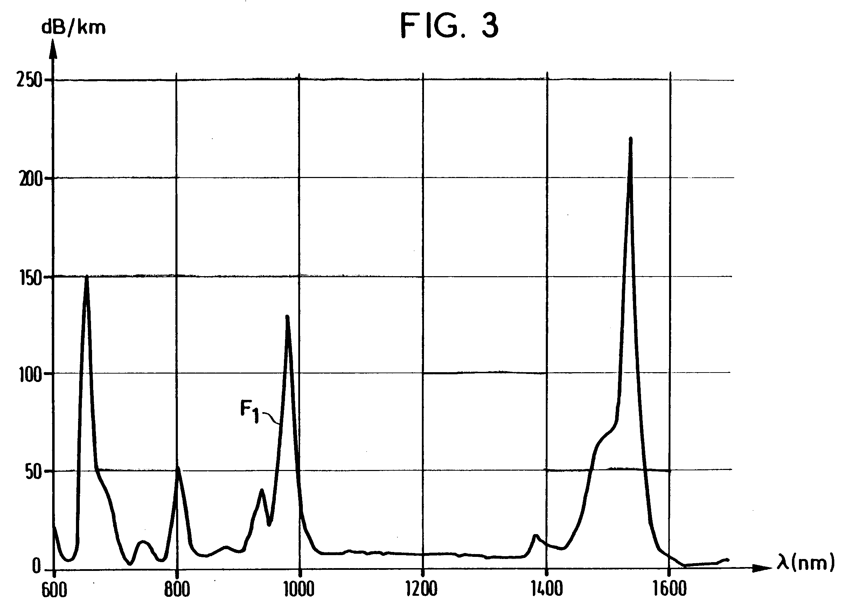

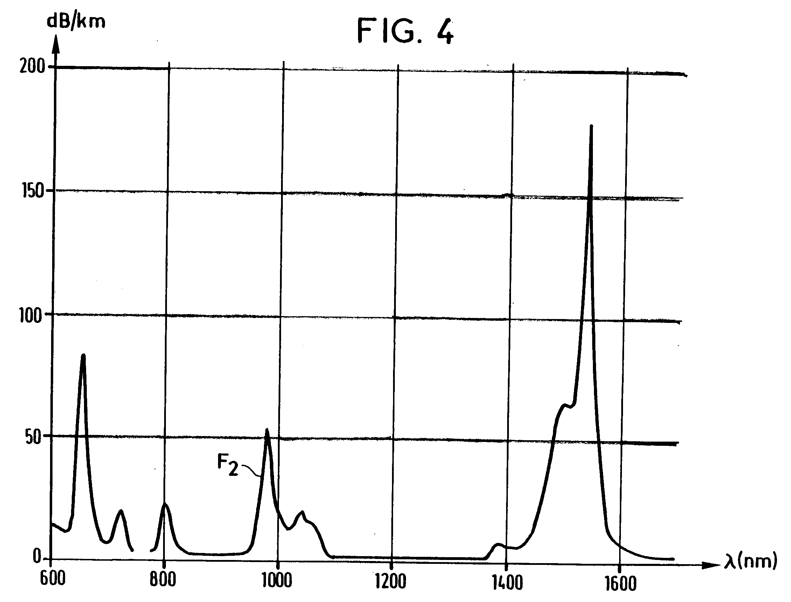

On a représenté dans les figures 3 et 4 des courbes d'atténuation analogues $F_1$ et $F_2$ (les pertes sont à l'échelle linéaire) pour deux types de fibres selon l'invention dopées à environ 10 ppm d'erbium. Leur matrice vitreuse est proche de celle de la fibre correspondant à la courbe $A_2$ de l'art antérieur.

Si l'on compare les courbes $A_1$, $A_2$, $F_1$, $F_2$, on peut faire les remarques suivantes :

Dans les courbes $F_1$ et $F_2$, les pics d'absorption des ions erbium sont tout à fait "normaux" par rapport aux indications données dans la littérature et la qualité optique des deux fibres est excellente puisque le fond continu en dehors des pics d'absorption est très bas avec des minima de l'ordre de 1 à 2 dB/km.

Pour la courbe $A_2$ correspondant à une fibre dont le matériau de base du coeur est proche de celui des fibres selon l'invention, le minimum d'atténuation est d'environ 70 dB/km, ce qui témoigne de la perturbation apportée par le dopage élevé de la matrice vitreuse de la fibre.

Quant à la courbe $A_1$, le minimum est d'environ 7 dB/km, ce qui est déjà plus élevé que les minima des fibres selon l'invention : en outre la zone de 1200 à 1350 nm où l'on observe une élévation de l'atténuation est fort suspecte car elle ne correspond pas à l'absorption de l'erbium. Enfin, on peut soupçonner un élargissement des pics d'absorption car les ions erbium sont incorporés de façon inhomogène quant à leur environnement.

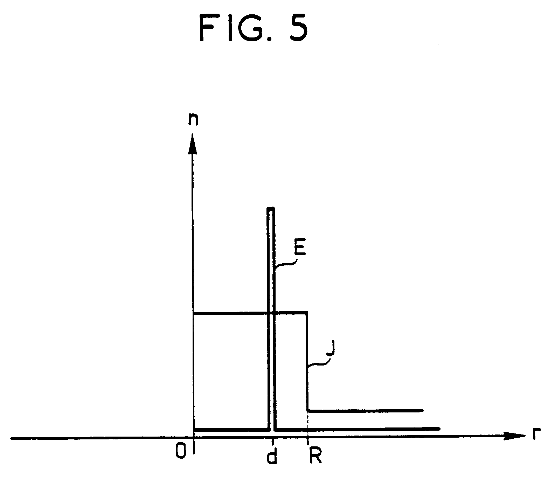

On réalise ensuite une autre fibre selon l'invention de même longueur et de même taux de dopage, mais en choisissant précisément la localisation du dopage en erbium dans le coeur de la fibre. Ceci est tout à fait possible quand on met en oeuvre le procédé rappelé plus haut. On localise l'erbium entre la deuxième et la troisième couche de coeur, ce qui implique une position radiale d dans le coeur de rayon R d'environ 0,8 R pour la couche de dopage. On a représenté dans la figure 5 par la courbe J le profil de l'indice de réfraction n de la fibre en fonction de son rayon r; la courbe E correspond au profil de la concentration en ions erbium.

Pour une puissance de pompe de 45 mW on obtient un gain net G de 18 dB et un gain relatif g de 0,40 dB/mW, ce qui est encore meilleur que pour les exemples précédents.

On constate ainsi qu'indépendamment des conditions de couplage du faisceau pompe dans la fibre, le fait d'utiliser une grande longueur de fibre suivant l'invention, est favorable à une répartition de l'énergie incidente sur l'ensemble des quatre modes guidés dans la fibre et qui sont pour $\lambda$ = 514,5 nm :

$LP_{01}$, $LP_{11}$, $LP_{21}$, $LP_{02}$.

Le maximum d'énergie de la pompe se trouve réparti dans les modes d'ordre supérieur ($LP_{11}$, $LP_{21}$, $LP_{02}$). Compte tenu des répartitions radiales de cette énergie, il existe une coïncidence entre la position de la terre rare et le maximum de l'intensité du champ des trois modes précités, les configurations azimutales de ces modes pouvant être prises en compte facilement d'un point de vue qualitatif. La zone de tolérance pour cette coïncidence se situe entre 0,6 R et 0,85 R. On a dans ce cas une interaction particulièrement favorable entre le faisceau pompe et les ions erbium, ce qui permet de réaliser de façon efficace l'inversion de population.

Enfin, la répartition radiale du champ du faisceau signal est relativement étalée, du fait des paramètres opto-géométriques de la fibre, ce qui veut dire que l'interaction entre les ions excités et le faisceau signal est relativement bonne. Le critère total est un compromis entre ces deux interactions : interaction pompe-population ions erbium d'une part et interaction population ions erbium excités - signal d'autre part.

Bien entendu l'invention n'est pas limitée aux modes de réalisation qui viennent d'être décrits. Ainsi le dopage en erbium de la fibre peut varier entre 5 et 50 ppm, la longueur de la fibre étant alors choisie entre 250 mètres et 30 mètres selon le dopage de manière à rendre le gain net G maximum. En effet, il existe un optimum pour la longueur de la fibre, toutes les autres conditions étant fixées par ailleurs, du fait de la compétition entre les phénomènes d'absorption concernant à la fois les longueurs d'onde de pompe et de signal alors que le phénomène d'amplification ne concerne que la longueur d'onde de signal.

## Revendications

1. Amplificateur laser à fibre dopée à l'erbium, caractérisé par le fait que ladite fibre est dopée à un taux compris entre 5 et 50 ppm, que la longueur de ladite fibre est comprise entre 250 mètres et 30 mètres selon le taux de dopage choisi, et que la position radiale de la zone dopée coïncide sensiblement avec le maximum d'énergie de l'ensemble des modes de propagation de la longueur d'onde de pompe dans ladite fibre, ladite position radiale de la zone dopée se situant à une distance du centre de la fibre comprise entre 0,6 R et 0,85 R, R étant le rayon du coeur de cette fibre.

## Claims

1. An erbium-doped fiber laser amplifier, characterized by the fact that said fiber is doped to a concentration lying in the range 5 ppm to 50 ppm, that the length of said fiber lies in the range 250 m to 30 m depending on the selected concentration of doping, and that the radial position of the doped zone substantially coincides with the energy maximum of the set of propagation modes in said fiber at the pumping wavelength, said radial position of the doped zone lying at a distance from the center of the fiber in the range 0.6 R to 0.85 R where R is the radius of the core of said fiber.

## Patentansprüche

1. Laserverstärker mit einer mit Erbium dotierten Faser, dadurch gekennzeichnet, daß die Faser mit einer Rate zwischen 5 und 50 ppm dotiert ist, daß die Länge der Faser zwischen 250 m und 30 m je nach der gewählten Dotierungsrate liegt und daß die radiale Position der dotierten Zone im wesentlichen mit dem Energiemaximum aller Fortpflanzungsmodi der Pumpwellenlänge in der Faser übereinstimmt, wobei sich die radiale Position der dotierten Zone in einem Abstand von der Mitte der Faser befindet, der zwischen 0,6 R und 0,85 R liegt, wobei R der Radius des Kerns der Faser ist.

## FIG. 1

## FIG. 2

EP 0 368 196 B1

FIG. 3

EP 0 368 196 B1

FIG. 4

# FIG. 5